# EUROPEAN PATENT APPLICATION

(11) **EP 3 771 817 A1**
(43) Date of publication of application: **03.02.2021**
(21) Application number: 18914551.9
(22) Date of filing: 17.12.2018
(51) Int. Cl.: F03D 3/06, F03D 3/02

(54) **TOWER-MOUNTED WIND POWER SYSTEM**

(30) Priority: 11.04.2018 MX 2018004448
(71) Applicant: Marlasca Garcia, Francisco, Zaragoza Puebla, 72100 (MX)
(72) Inventor: Marlasca Garcia, Francisco, Zaragoza Puebla, 72100 (MX)
(74) Representative: Sahuquillo Huerta, Jesús
(86) International application number: PCT/MX2018/050032
(87) International publication number: WO 2019/199155

(57) **Abstract**

The present description relates to a tower-mounted wind power system that comprises a supporting structure configured to support and protect a vertical-axis wind turbine arranged inside said structure, wherein the vertical-axis wind turbine comprises a variable number of air-collection levels, each of said air-collection levels made up of a propeller, wherein the vertical-axis wind turbine is made up of the propellers of the air-collection levels and a vertical shaft, each of the propellers of the turbine comprising a first and second plurality of air-collection elements in order to improve the collection of wind power.

## Description

### TECHNICAL FIELD

This invention relates to the technical field of renewable energies, specifically to vertical-axis wind generators or wind generators perpendicular to the wind direction, mounted on a frustoconical tower or three-dimensional lattice tower, which convert wind energy by rotary motion on a rotary shaft, thus generating electric power for use in a facility or for distribution to a remote location.

### BACKGROUND

Currently, there are several types of wind generators or aerogenerators, and depending on their axis of rotation they are separated into the following two major groups: horizontal-axis generators (single propeller aerogenerators, which are widely used); and vertical-axis generators (such as the generator of this application). The horizontal-axis aerogenerators such as that disclosed in WO 2007/144003 A2 usually have higher manufacturing, installation and maintenance costs compared to vertical-axis generators. Likewise, there are several types of vertical-axis aerogenerators, such as those disclosed in WO 2013/032415 A1 and US 2012/0242087 A1, which harness the wind energy in a similar way as the system of this invention. However, said structures are limited to a single air-collection level comprising a single propeller mounted on the wind turbine tower, and as a result no effective harnessing of wind energy is fully obtained. On the other hand, the aerogenerators disclosed in WO 2009/079926 A1 and WO 2012/067287 A1 have a structure comprising a turbine with a variable number of propellers (or air-collection levels) arranged along the tower, however, the inventor of this invention has found that a wind turbine having blades or air collectors of the same type does not allow for a proper collection of the wind energy, particularly in the case of low wind speeds.

### SUMMARY OF THE INVENTION

In order to solve the above-mentioned problems of the state of the art, this specification provides a new structure for a wind power system, comprising a wind turbine consisting of a variable number of propellers, the number being determined according to the installation site requirements for the wind power system (wind behavior at the installation site and electric power requirement); each propeller has two different types of air collectors allowing a better harnessing of the wind energy, even with low wind speeds, such as described below.

A first objective of the current invention is to provide an alternate wind power system capable of obtaining a better harnessing of wind energy to generate electric power compared to the currently known state-of-the-art generators; said alternate wind power system being easy to install, and having lower manufacturing, maintenance, and installation costs.

A second objective of this invention is to provide a wind power system having a variable structure, that is, a structure where the number of air-collection levels can be modified according to the energy requirements and the wind behavior at the installation site.

A third objective of this invention is to improve the air collection of the propellers by providing two different types of air collectors on each propeller in order to obtain a better harnessing of wind speed at a lower cost.

According to a first aspect of the embodiments of disclosed herein, a tower-mounted wind power system is provided, comprising:
a supporting structure configured to support and protect a vertical-axis wind turbine arranged inside said structure; said vertical-axis wind turbine comprising a variable number of air-collection levels; the air-collection levels each comprising a propeller; wherein said vertical-axis wind turbine is comprised of said air-collection propellers and a vertical shaft with a plurality of mounting flanges thereon to support each turbine propeller;
a brake and pulley system to reduce and transmit the energy generated by the rotation of the propeller around said vertical shaft, said brake and pulley system being connected to the lower end of said vertical shaft;
a power generator connected to the brake and pulley system, and arranged in the lower portion of the supporting structure for electric power generation;
wherein each propeller of the wind power system comprises:
   - a circular support plate having an annular ring and radial beams connecting said ring to the center of said plate;
   - a first plurality of air collection elements arranged on the annular ring; and
   - a second plurality of air collection elements arranged on the radial beams.

According to a second aspect of the embodiments disclosed herein, a tower-mounted wind power system is provided, wherein each propeller comprises a central opening for the vertical shaft to pass through, and around said opening the clamping flanges are arranged.

According to a third aspect of the embodiments disclosed herein, a tower-mounted wind power system is provided, wherein the vertical-axis turbine shaft has one upper flange for each propeller of said turbine. The propellers further comprise a plurality of support bars, one for each air collection element of the first plurality of air collection elements, so that each support bar is connected by one end thereof to each air collection element of the first plurality of air collection elements, and by the other end thereof to the upper flange of the vertical turbine shaft, in order to support said turbine air collection elements. Each propeller of said system further comprises a plurality of tension bars connected to the upper flange and to the radial beams of the circular support plate to provide better stability to the propeller structure.

According to a fourth aspect of the embodiments disclosed herein, a wind power system is provided wherein the number of air-collection levels of the wind turbine is determined based on the requirements of the installation; the number of air-collection levels of said system may be any number, however, preferably between 1 and 12 air-collection levels, and most preferably between 1 and 8 air-collection levels.

According to a fifth aspect of the embodiments disclosed herein, a wind power system is provided having propellers with blades as the first plurality of air collection elements, which are evenly arranged along the circumference of the annular ring; the first plurality of air collection elements can be comprised of 4 blades, most preferably 6 blades.

According to a sixth aspect of the embodiments as disclosed herein, a wind power system is provided having propellers with smaller size internal blades as the second plurality of air collection elements, which are evenly arranged along each radial beam of the circular support plate of the propeller; the second plurality of air collection elements can be comprised of 4 smaller size internal blades, most preferably 6 internal blades.

It should be understood that both the general description and the detailed disclosure of the invention are intended for explanatory and exemplary purposes only, and are not restrictive of the invention, as claimed.

### BRIEF DESCRIPTION OF THE DRAWINGS

The accompanying drawings, which are included in this disclosure and are part thereof, illustrate the embodiments of the invention and, along with the following disclosure are meant to explain the principles thereof.
Figure 1 is a perspective view of the tower-mounted wind power system as described herein.
Figure 2 is a front view of the tower-mounted wind power system as described herein.
Figure 3 is an upper plan view of the wind power system as described herein.
Figure 4 is a front view of the vertical-axis turbine comprised of a plurality of propellers and a vertical shaft.
Figure 5 is a perspective view of the vertical-axis turbine as described herein.
Figure 6 is a perspective view of a turbine propeller.
Figure 7 is a front view of the turbine propeller.
Figure 8 is an upper plan view of the turbine propeller.

### DETAILED DESCRIPTION

In the following description, a detailed reference of the embodiments of the invention is made, the examples of which are illustrated in the accompanying drawings. The following description refers to the accompanying drawings in which the same reference numbers in different drawings refers to the same or similar elements, unless otherwise indicated. The implementations as established in the following description of exemplary embodiments do not represent all the implementations consistent with the invention. Rather, these are only examples of apparatuses and structures consistent with the aspects of the invention, according to what is claimed in the accompanying claims.

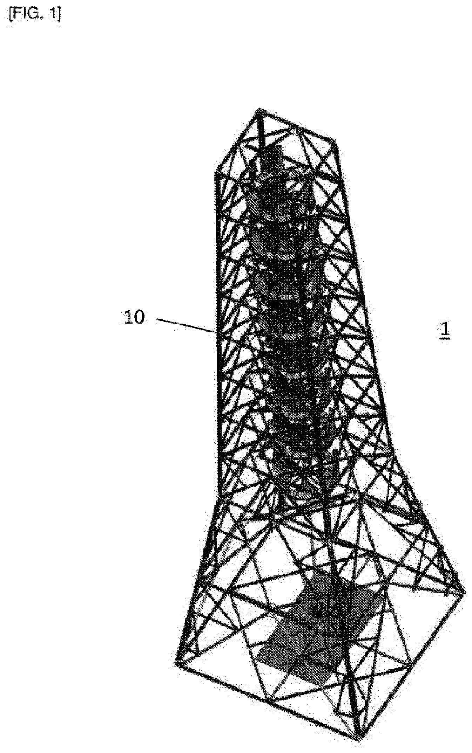

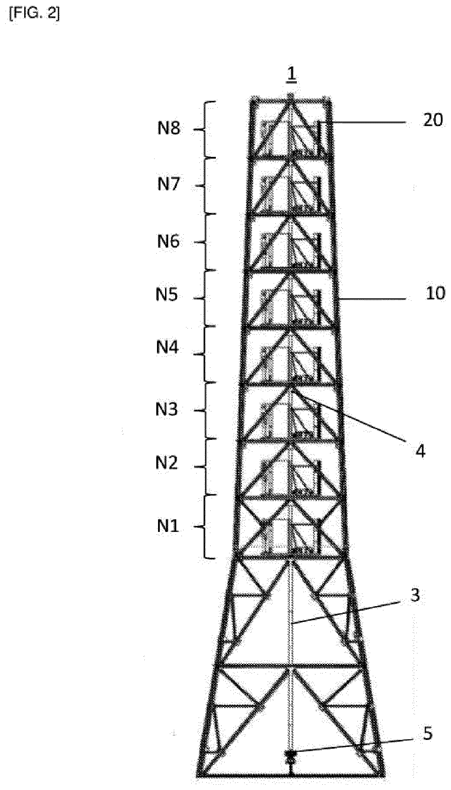

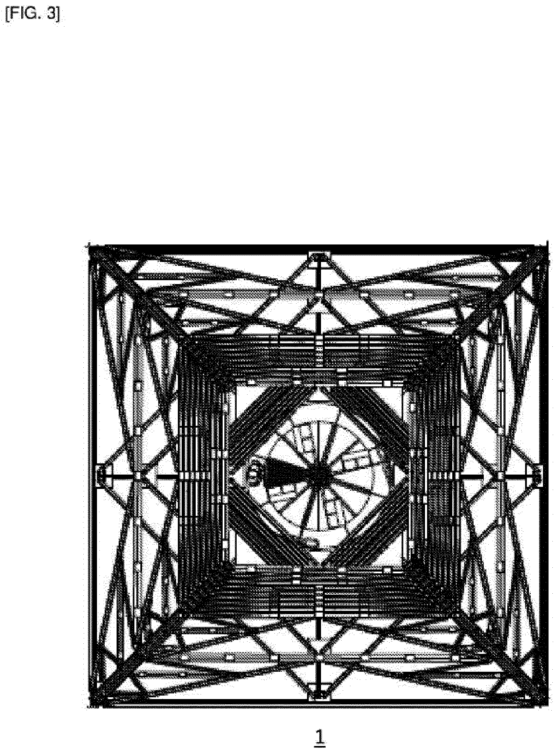

Figures 1, 2 and 3 show perspective, front and upper views, respectively, of the tower-mounted wind power system (1) as described herein, comprised of a supporting structure (10) consisting of a tower having a frustoconical structure commonly known in the state of the art; said structure supports and protects the vertical-axis wind turbine (2), which has a variable number of air-collection levels (N1-N8).

A frustoconical tower structure is selected as the supporting structure (10) because in addition to supporting the wind turbine, it protects the propellers thereon from situations or elements that can be present in the environment, such as large tree branches or rocks that can be swept away by strong wind gusts. This is a type of structure commonly used in the technical field of the invention.

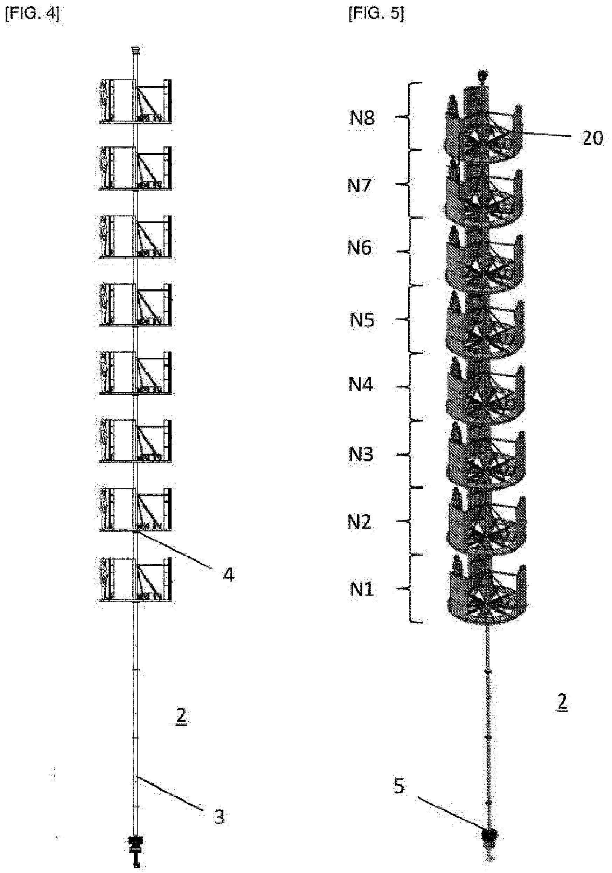

Figures 4 and 5 illustrate the vertical-axis wind turbine (2) of system (1), which has a plurality of air-collection levels (N1 to N8). The number of turbine air-collection levels are selected according to the installation requirements and wind behavior at the installation site; the number of the turbine air-collection levels can be any number, however, preferably between 1 and 12 air-collection levels, and most preferably between 1 and 8 air-collection levels, like the turbine as illustrated herein.

Each air-collection level (N1 to N8) is comprised of one propeller (20), meaning that the number of air-collection levels of the turbine is equivalent to the number of propellers forming the same.

Said vertical-axis wind turbine (2) also has a vertical shaft (3) with clamping flanges (4) provided thereon, which are configured to support each turbine propeller (20). The turbine's vertical shaft (3) is positioned in the center of the supporting structure (10). Further, the propellers (20) have a central opening (26) for the vertical shaft (3) to pass through, and around said opening there are clamping flanges (4) arranged, thus making up the wind turbine structure.

Also, a brake and pulley system (5) is connected to a lower end of the vertical shaft (3), configured to reduce and transmit the energy generated by rotation of the propellers around the vertical shaft (3) to a power generator (not shown) connected to said brake and pulley system; the power generator is arranged in the lower portion of the supporting structure for electric power generation and adapted to distribute the generated electric power to a facility or remote location.

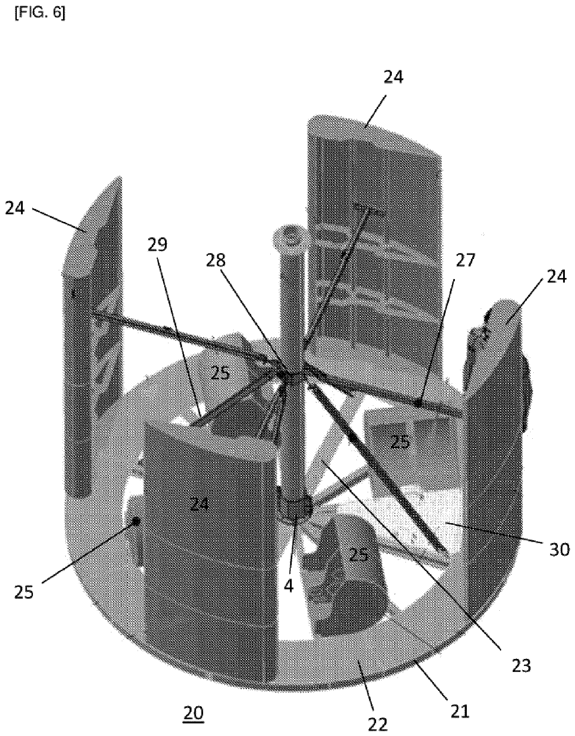

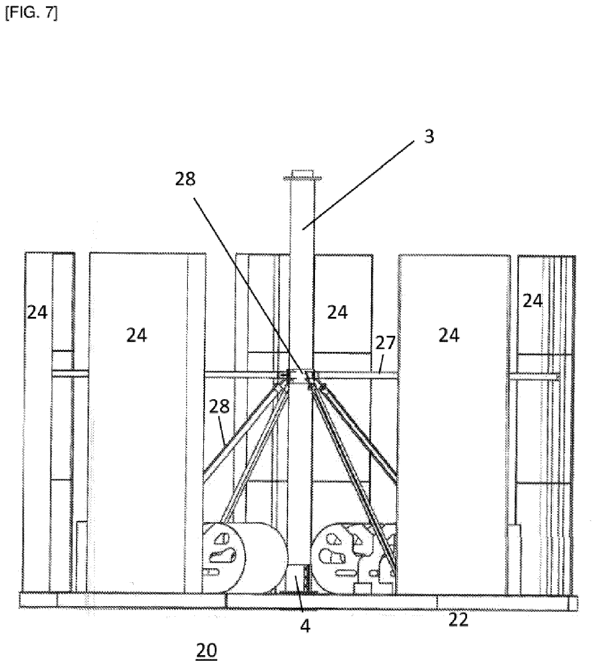

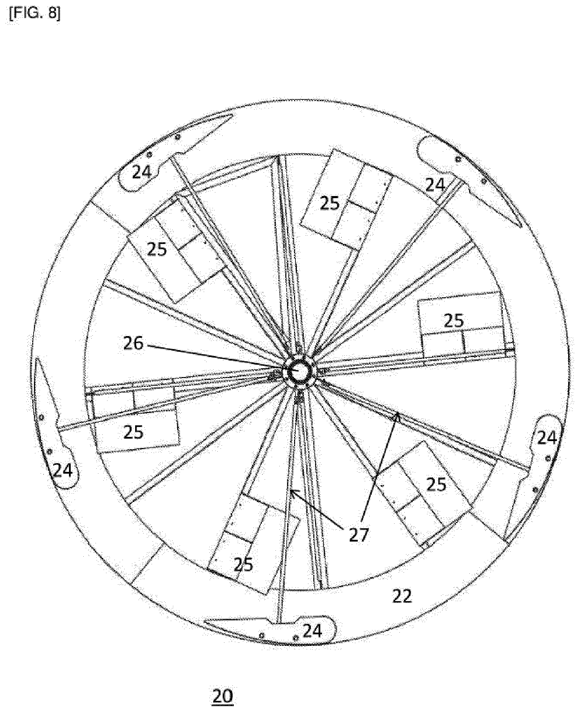

Figures 6, 7 and 8 show a preferred embodiment of the propellers (20) of the vertical-axis wind turbine (2) of the invention, which have a circular support plate (21) consisting of an annular ring (22) and a plurality of radial beams (23) connecting said annular ring to the central opening (26) of the plate (21).

The propellers (20) further have a first plurality of air collection elements (24) arranged on the annular ring (22) of the circular support plate (21). The first plurality of air collection elements (24) are preferably blades. The structure of the blades allows for an adequate air collection. The number of air collection elements of the first plurality of air collection elements (24) is not limited, that is, it can vary according to the wind behavior at the site of the system installation, however, the first plurality of air collection elements may comprise 4 blades, or most preferably 6, as illustrated in these embodiments.

Said propellers (20) also have a second plurality of air collection elements (25) arranged on the radial beams (23) of the circular support plate (21). The second plurality of air collection elements (25) are preferably smaller internal blades, which allow for an effective harnessing of the wind energy since they take advantage of the wind energy entering into the propeller (20). The number of air collection elements of the second plurality of air collection elements is not limited, and may vary according to the wind behavior at the system installation site; the number of air collection elements of the second plurality of air collection elements (25) may be 4 internal blades, or most preferably 6, as illustrated in the current embodiments.

Furthermore, the vertical shaft (3) of the turbine (2) has one upper clamping flange (28) for each propeller (20) making up the turbine (2); and the propellers (20) comprise a plurality of support bars (27), specifically one for each air collection element of the first plurality of air collection elements (24) contained in said propeller (20); so each support bar (27) is connected by one end thereof to each air collection element of the first plurality of air collection elements (24), and by the other end thereof to the upper flange (28) arranged about the vertical shaft (3), thus further supporting said turbine air collection elements, and also imparting a certain degree of elasticity thereto to prevent rupturing or detachment of said air collection elements.

On the other hand, the propellers (20) have a plurality of tension bars (29) connected to the upper flange (28) of the vertical shaft (3) and the radial beams (23) of the circular support plate (21), in order to provide better stability to the propeller structure (20). The propellers further have a step (30) formed between a pair of radial beams (23) of the circular support plate (21) to facilitate the maintenance service of the propeller.

With the arrangement as described above a tower-mounted wind power system is obtained having a number of air-collection levels that can be modified according to the installation requirements, and providing lower manufacturing, installation and maintenance costs than other structures known in the state of the art. Additionally, the propellers result in better harnessing of the wind energy since they are provided with two different types of air collection elements.

The following is a comparative table showing results from different measurements carried out by the inventor on different types of wind power systems compared to the system described herein.

**Table 1**

| **Parameter** | **Conventional Solar Cells** | **Horizontal Axis Aerogenerators** | **Vertical-AxisWind Turbine (This** **Invention)** |
|---|---|---|---|
| Generating source | Solar energy | Wind energy (14 m/s) | Inertia generated by wind energy |
| Generation capacity | 1 MW | 1 MW | 1 MW |
| Generation efficiency | 60% | 70 % | 98 % |
| Daily generation | 3000 kW | 12,600 kW | 23,520 kW |
| Generation hours / day | 5 | 18 | 24 |
| kW/h per generating unit | 720 kW/h | 700 kW/h | 980 kW/h |
| Charging time of 1 MW (Battery) | 5 hours | 12 hours | Continuous |
| Annual efficiency degradation | 15 % | 8% | 1 % |
| Area per generating unit | 40,000 *m*² | 2,000 *m*² | 400 *m*² |
| Sales price | 1,447,520 USD | 3,200,000 USD | 2,200,000 USD |

According to the results in Table 1 above, it is determined that the wind power system as described in this application provides a better power generation efficiency at lower cost, using less resources than a facility using solar cells or an aerogenerator with a horizontal-axis propeller.

Other embodiments of the invention will be apparent to those with ordinary skills in the art upon consideration of the disclosure and practice of the invention described in this specification. This application is meant to cover any variation, use or adaptation of the invention following the general principles thereof, including such departures from the disclosure as is known or customarily practiced in the technical field. The specification and examples are intended to be considered as exemplary only, with the scope and spirit of the invention indicated by the following claims.

## Claims

1. A tower-mounted wind power system (1) comprising:
a supporting structure (10) configured to support and protect a vertical-axis wind turbine (2) arranged inside said structure, wherein said vertical-axis wind turbine (2) comprises a variable number of air-collection levels (N1 - N8), said air-collection levels each comprising a propeller (20); wherein said vertical-axis wind turbine is comprised of the propellers of said air-collection levels (N1 to N8) and a vertical shaft (3) having thereon a plurality of clamping flanges (4) to support each turbine propeller (20);
a brake and pulley system (5) to reduce and transmit the energy generated by the rotation of the propeller on said vertical shaft (3), said brake and pulley system being connected to the lower end of said vertical shaft;
a power generator connected to the brake and pulley system and arranged in the lower portion of the supporting structure (10) for electric power generation;
the wind power system **characterized in that** each propeller (20) of the turbine (2) comprises:
- a circular support plate (21) having an annular ring (22), and radial beams (23) connecting said annular ring to the center of the plate;
- a first plurality of air collection elements (24) arranged on the annular ring (22); and
- a second plurality of air collection elements (25) arranged on the radial beams (23).

2. The wind power system according to claim 1, wherein each propeller further comprises a central opening (26) for the vertical shaft (3) of the turbine to pass through, and around said opening the clamping flanges (4) are arranged.

3. The wind power system according to claim 1, wherein the vertical shaft (3) of the turbine has one upper flange (28) for each propeller (20) of said turbine.

4. The wind power system according to claim 3, wherein the propellers (20) comprise a plurality of support bars (27), one for each air collection element of the first plurality of air collection elements (24).

5. The wind power system according to claim 4, wherein each support bar (27) is connected by one end thereof to each air collection element of the first plurality of air collection elements (24) of the propeller, and by the other end thereof to the upper flange (28) of the vertical shaft (3) of said turbine.

6. The wind power system according to claim 3, wherein the propellers (20) have a plurality of tension bars (29) connected to the upper flange (28) and to the radial beams (23) of the circular support plate (21).

7. The wind power system according to claim 1, wherein the number of air-collection levels of the wind power system is determined according to the installation requirements.

8. The wind power system according to claim 1, wherein the first plurality of air collection elements (24) are blades.

9. The wind power system according to claim 8, wherein the air collection elements of the first plurality of air collection elements (24) are evenly arranged along the circumference of the annular ring (22).

10. The wind power system according to claim 1, wherein the second plurality of air collection elements (25) are smaller internal blades.

11. The wind power system according to claim 10, wherein the air collection elements of the second plurality of air collection elements (25) are evenly arranged along each radial beam (23) of the circular support plate.
